# EUROPÄISCHE PATENTANMELDUNG

(11) **EP 0 841 775 A1**
(43) Veröffentlichungstag der Anmeldung: **13.05.1998**
(21) Anmeldenummer: 97119114.3
(22) Anmeldetag: 03.11.1997
(51) Int. Cl.: H04L 12/28

(54) **Ein/Ausgabeverfahren und -Einrichtung für ein Bussystem der Gebäudesystemtechnik**

(30) Priorität: 06.11.1996 DE 19645626
(71) Anmelder: ABB PATENT GmbH, 68309 Mannheim (DE)
(72) Erfinder: Röttger, Dieter, 58730 Fröndenberg (DE); Götte, Karsten, Dr., 58511 Lüdenscheid (DE)
(74) Vertreter: Rupprecht, Klaus, Dipl.-Ing.

(57) **Zusammenfassung**

Die Erfindung bezieht sich auf ein Busgerät für den Anschluß an ein Bussystem der Gebäudesystemtechnik, wobei das Busgerät ein Ausgabegerät (10) und einen Busankoppler (100) mit einem Ein/Ausgabegerät-unabhängigen Teil (120) und einem geräteabhängigen Teil (110) enthält. Außerdem bezieht sich die Erfindung auf ein Verfahren zur Signal- Ein- und -Ausgabe mit einem solchen Busgerät. Mit der Erfindung wird angestrebt die Wiederverwendbarkeit von Software-Lösungen sowie die Funktionalität des Busgeräts trotz eng begrenzter System-Ressourcen zu erhöhen. Dies wird im wesentlichen durch Speicherung von modularen Sensor- und Aktor-Einzelfunktionen (123, 124), eine durch Eingabe von Parametern (127) realisierbare Auswahl von Funktionen (123, 124), sowie eine Zwischenspeicherung (125, 126) von Eingaben und Ausgaben erreicht.

## Beschreibung

Die Erfindung bezieht sich auf ein Busgerät für den Anschluß an ein Bussystem der Gebäudesystemtechnik nach dem Oberbegriff des Anspruches 1. Außerdem bezieht sich die Erfindung auf ein Verfahren zur Eingabe von Sensorzuständen und zur Befehlsausgabe an Aktoren in einem solchen Bussystem.

Ein Bussystem der Gebäudesystemtechnik ist beispielsweise der Europäische Installationsbus EIB, der die Verlegung von Busleitungen im Gebäude erfordert. Der EIB ist ein von der EIBA, European Installation Bus Association konzipiertes 2-Draht-Bussystern zur Steuerung von Beleuchtungseinrichtungen, Jalousien, Heizungen und anderen elektrischen Verbrauchern. Das EIB-System und die EIB-Spezifikationen sind beispielsweise beschrieben im ZVEI/ZVEH-Handbuch Gebäudesystemtechnik, herausgegeben von der Wirtschaftsförderungsgesellschaft der Elektrohandwerke, Frankfurt, 1993. Ein anderes Bussystem der Gebäudesystemtechnik ist ein als Powernet bezeichnetes, zu den EIB-Spezifikationen kompatibles Bussystem, das das Niederspannungsnetz als Busleitungen benutzt und daher keine besonderen Busleitungen benötigt. Ein solches System ist beispielsweise beschrieben in Busch-Powernet EIB, Die sichere Übertragung über das vorhandene Stromnetz, Druckschrift Nr. BJE 0001-0-0750, April 1996, der Firma Busch-Jaeger Elektro GmbH, Lüdenscheid. Die Erfindung ist in allen diesen Bussystemen anwendbar. Als Ein- und Ausgabegeräte für solche Bussysteme werden eine Reihe von Hardware-Komponenten eingesetzt, die teils schon für Vorläufersysteme entwickelt und eingesetzt wurden und teils Neuentwicklungen sind. Ein typisches Eingabegerät ist beispielsweise ein Unterputz-Bedienelement 6117, das vier Tastsensoren aufweist und das neben anderen Buskomponenten in der Druckschrift Busch-Installationsbus EIB, Preisliste der Firma Busch-Jaeger Elektro GmbH, Druckschrift Nr. BJE 000529, April 1994, aufgeführt ist.

Solche universell einsetzbare Ein- und Ausgabegeräte sind an ein Bussystem mittels eines Busankopplers anschließbar. Diese E/A-Geräte sind nicht nur bezüglich ihrer Einsatzmöglichkeiten in unterschiedlichen Bussystemen universell, sondern auch bezüglich der Funktionen, die ihnen je nach Anwendung verliehen werden können. Mögliche Applikationen des erwähnten Vierfach-Tastsensors sind beispielsweise viermal Schalten, viermal Jalousiesteuerung, viermal Dimmen, zweimal Dimmen und zweimal Jalousiesteuerung sowie Aktivierung einer bestimmten Lichtszene.

Im erwähnten ZVEI/ZVEH-Handbuch ist im Kapitel 5.1.2 beschrieben, daß die jeweilige Gerätefunktion durch die Anwendersoftware festgelegt wird, die in den Busankoppler geladen wird. Der Busankoppier mit Anwendersoftware bildet zusammen mit einem Ein- oder Ausgabegerät ein Busgerät.

Ein Busankoppler enthält einen Mikroprozessor oder Mikrocomputer mit unterschiedlichen Speichern wie ROM, EEPROM und RAM, sowie weitere Hardware-Ressourcen, wie beispielsweise Timer. Zu den Ressourcen gehören auch Stromversorgungseinrichtungen, die einen detektierbaren Strom durch Tastsensoren treiben oder eine Relaisansteuerung ermöglichen. Außerdem ist im Busankoppler eine Systemsoftware installiert. Zur Anpassung an bestimmte Ein- und Ausgabegeräte ist eine Hardware-Anpassung vorhanden, in der Ein-Ausgabefunktionen als Anwenderprogramm gespeichert sind und die Zugriff auf die Systemressourcen hat.

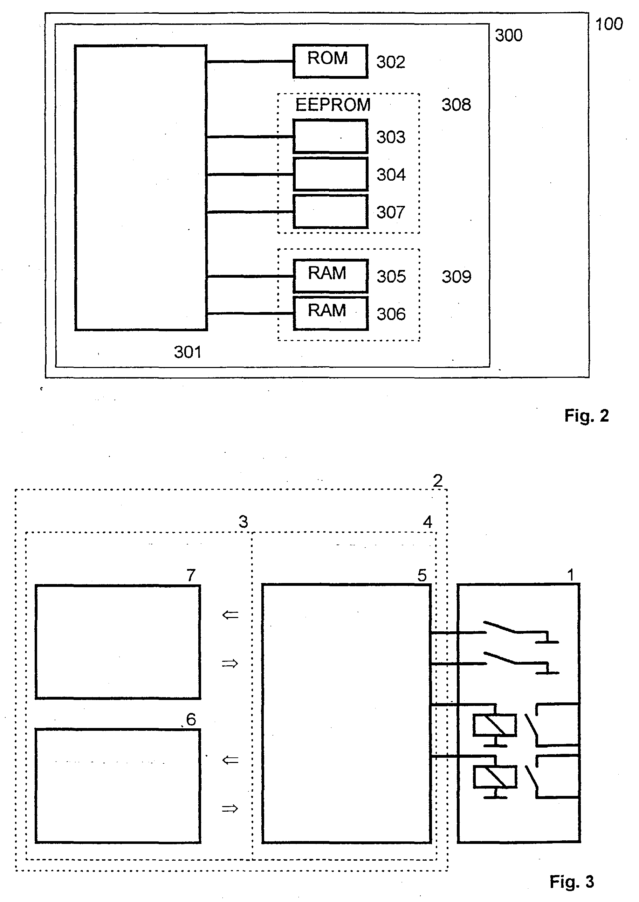

**Fig. 3** zeigt in einer Prinzipdarstellung ein bekanntes Busgerät mit einer E/A-Geräte-Hardware 1, die an einen Busankoppler 2 angeschlossen ist. Der Busankoppler 2 enthält einen E/A-Geräte-unabhängigen Teil 3 und einen E/A-Geräte-abhängigen Teil 4. Der geräteunabhängige Teil 3 enthält System-Hardware-Ressourcen 6 sowie eine Systemsoftware 7. Der hardwareabhängige Teil 4 enthält die Hardware-Anpassung 5 mit der Anwendersoftware zur Festlegung der Gerätefunktionen und zur Anpassung der E/A-Geräte-Hardware an das Bussystem.

Die dargestellte Konzeption des bekannten Busgeräts hat den Nachteil, daß nicht nur für jede E/A-Geräte-Hardware, sondern auch für jede gewünschte Gerätefunktion oder Funktionskombination eine spezielle Anwendersoftware erforderlich ist. Um wenigstens die gängigsten Anwendungsfälle abdecken zu können, ist eine Vielzahl von Software-Versionen erforderlich. Im Hinblick auf den Entwicklungsaufwand und die für den Anwender undurchsichtige Dateienvielfalt, können nicht alle wünschenswerten Anwendungsfunktionen für ein Produkt zur Verfügung gestellt werden. Für ähnlich Eingabegeräte, wie z. B. 4-fach-Schaltsensor, IR-Fernbedienung und 4-fach-Binäreingang ist bei gleichen Anwendungsfunktionen für jedes Gerät eine andere Anwendersoftware erforderlich. Es läßt sich umgekehrt auch keine Standard-Software schaffen, die für unterschiedliche Geräte mit ähnlichen Aufgaben einsetzbar wäre.

Die benötigten Funktionen sind sehr unterschiedlich. Sie erfordern unterschiedlich viele Objekte, Timer und RAM-Plätze als Zwischenspeicher. Eine Busankopplung ist aber ein sehr kleines System mit sehr begrenztem Vorrat an Speicherplätzen. Auch dadurch sind die Möglichkeiten zur Realisierung bestimmter Funktionskombinationen ganz wesentlich eingeschränkt.

Der Erfindung liegt daher die **Aufgabe** zugrunde, ein Busgerät für den Anschluß an ein Bussystem der Gebäudesystemtechnik anzugeben, bei dem - trotz geringer Datenspeicherkapazität - eine beliebige Funktionskombination festlegbar ist. Außerdem bezieht sich die Erfindung auf ein Verfahren zur Eingabe von Sensorzuständen und zur Befehlsausgabe an Aktoren unter Beachtung der vorgenannten Zielsetzung.

Diese Aufgabe wird bei einem Busgerät nach dem Oberbegriff des Anspruchs 1 durch dessen kennzeichnende Merkmale gelöst. Vorteilhafte Ausgestaltungen sowie ein Ein/Ausgabeverfahren sind in weiteren Ansprüche angegeben.

Beim erfindungsgemäßen Busgerät ist durch eine Reihe von Maßnahmen erreicht, daß der E/A-Geräte-unabhängige Teil der Busankopplung im Vergleich zum Stand der Technik wesentlich vergrößert ist. Diese Maßnahmen beinhalten eine Schaffung und Speicherung von parametrierbaren Software-Modulen für jede einzelne Gerätefunktion, sowie eine Einfügung eines Übergabepunktes für einzulesende Sensorzustände und an Aktoren auszugebende Befehle oder Zustände. Damit verbunden ist eine deutlich verbesserte Wiederverwendbarkeit erarbeiteter Softwareteile sowie eine bessere Nutzung der kleinen gegebenen Speicherkapazität des Busankopplers. Der Entwicklungsaufwand ist verringert und es können mehr Anwenderfunktionen realisiert werden. Die gewünschte Busgerätefunktionalität läßt sich durch Parametereingabe auf einfache Weise festlegen und auch ändern.

Das erfindungsgemäße Ein/Ausgabeverfahren enthält korrespondierend zum Busgerät als wesentliche Schritte eine Definition und Festspeicherung von Geräteeinzelfunktionen, eine vom Anwender vorzunehmende Parametereingabe, mit der Funktionen ausgewählt und mit speziellen Eigenschaften versehen werden, sowie eine Zwischenspeicherung von Ein- und Ausgaben. Diese Maßnahmen verbessern die Wiederverwendbarkeit der erarbeiteten Software und ermöglichen eine Erweiterung der Busgerätefunktionalität.

Eine weitere Beschreibung der Erfindung erfolgt nachstehend anhand der Zeichnungsfiguren. Es zeigen
- Fig. 1: eine Prinzipdarstellung des erfindungsgemäßen Busgeräts,
- Fig. 2: einen Teil der Einrichtungen der Busankopplung des Busgeräts und
- Fig. 3: eine Prinzipdarstellung eines bekannten Busgeräts.

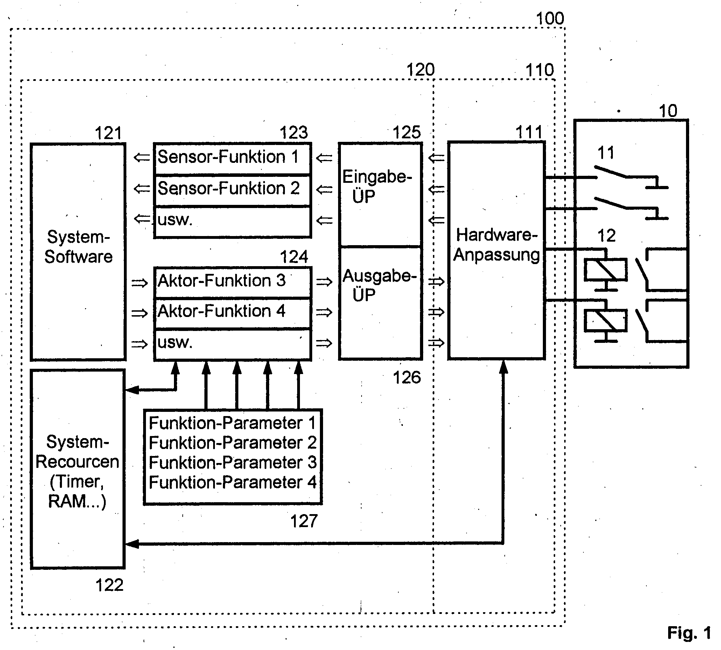

**Fig. 1** zeigt in einer - der bereits erläuterten Fig. 3 entsprechenden - Prinzipdarstellung ein Busgerät mit einer E/A-Geräte-Hardware 10, die an einen Busankoppler 100 angeschlossen ist. Der Busankoppler 100 enthält einen von der jeweiligen E/A-Geräte-Hardware 10 abhängigen Teil 110 und einen davon unabhängigen Teil 120.

Der abhängige Teil 110 ist mittels einer Hardware-Anpassung 111 realisiert, wie noch näher beschrieben wird. Der unabhängige Teil 120 ist strukturiert in eine System-Software 121, System-Hardware-Ressourcen 122, Sensoreinzelfunktionen 123, Aktoreinzelfunktionen 124, Funktionsparameter 127, einen Eingabe-Übergabe-Punkt 125 und einen Ausgabe-Übergabe-Punkt 126.

Auf die Ressourcen 122 greifen sowohl die Aktorfunktionen 123 als auch die Hardware-Anpassung 111 zu.

Die beispielhaft dargestellte E/A-Geräte-Hardware 10 enthält Sensoren 11, hier Tastsensoren und Aktoren 12, hier Ausgaberelais.

In **Fig. 2** ist dargestellt, daß der Busankoppler 100 einen Mikroprozessor oder Mikrocomputer 300 enthält, mit einer Verarbeitungseinheit 301, die mit einem nur Lesespeicher ROM 302, einem lösch- und programmierbaren Speicher EEPROM 308 mit ersten, zweiten und dritten Speicherbereichen 303, 304 und 307, sowie einem Schreib-Lese-Speicher RAM 309 mit Speicherbereichen 305 und 306.

Die weitere Erläuterung bezieht sich auf die Darstellungen in den Fig. 1 und 2.

Die Busgeräte-Einzelfunktionen 123, 124 sind jeweils als separate Softwaremodule im ROM 302 des Mikroprozessors 300 gespeichert.

Zu jeder Einzelfunktion sind im dritten Speicherbereich 307 des EEPROMs 308 bestimmte Parameter 127 als Parametersätze speicherbar. Die Eingabe der Parameter 127 kann z. B. mittels eines Bediengerätes vor Ort oder auch von einem zentralen Bedienplatz aus über die Busleitungen des Gesamtsystems erfolgen.

Die für die spezielle Anwendung benötigten Funktionen 123 bzw. 124 werden mittels Aufruf-Daten aus den Speicherbereichen 303 bzw. 304 des EEPROMs 308 aufgerufen. Die Menge der aufrufbaren Funktionen 123, 124 ist durch den Speicherplatz im EEPROM 308 sowie durch die Systemressourcen 122 begrenzt. Ein Parametersatz kann z. B. im Fall einer Dimmfunktion eine bestimmte Dimmgeschwindigkeit festlegen. Die Parameter bestimmen außerdem die Zuteilung der begrenzten Systemressourcen 122 zu den jeweiligen Funktionen.

Der Eingabe-Übergabe-Punkt 125 ist durch den Speicherbereich 305 des RAM realisiert. In ihm sind von der Hardware-Anpassung 111 fortlaufend erfaßte Eingangszustände, wie z. B. Stellung von Tastsensoren 11 oder z.B. Zustände von Binäreingaben zwischengespeichert zum Abruf durch die Sensorfunktionen 123.

Entsprechend ist der Ausgabe-Übergabepunkt 126 als RAM 306 realisiert, in den die Aktorfunktionen 124 Ausgabebefehle oder -zustände laden. Die Hardware-Anpassung 111 liest diese Zustände, wie z. B. Relaisstellung, LED-Status oder Dimmer-Helligkeit aus und steuert die Aktoren 12 entsprechend an.

Die Funktionen der Hardware-Anpassung 111 können bereits im ROM 302 fest installiert sein und vom EEPROM 308 aus aufgerufen werden. Es können aber auch Funktionen der Hardware-Anpassung 111 vom Anwender direkt in das EEPROM 308 geladen werden, beispielsweise als Hardware-Anpassung für neue E/A-Geräte 10, wodurch alle installierten Einzelfunktionen 123, 124 sofort auch für neue Geräte 10 verfügbar sind. Die Hardware-Anpassung 111 stellt benötigte Versorgungsspannungen für die E/A-Geräte 10 zur Verfügung und nimmt erforderliche Signalanpassungen vor. Sie greift dazu auf die Systemressourcen 122 zu, wie in Fig. 1 durch eine Pfeilverbindung angedeutet ist. Eine Zuteilung der Systemressourcen für die Hardware-Anpassung ist nicht erforderlich, da jeweils die ersten verfügbaren Systemressourcen verwendet werden.

## Patentansprüche

1. Busgerät für den Anschluß an ein Bussystem der Gebäudesystemtechnik, wobei das Busgerät ein Ein/Ausgabe(E/A)-Gerät (10) und einen Busankoppier (100) mit einem E/A-Geräte-unabhängigen Teil (120) und einem E/A-Geräte-abhängigen Teil (110) enthält, gekennzeichnet durch:
a) Mittel (302) zur Festspeicherung einer Vielzahl von Busgeräte-Einzelfunktionen (123, 124), die jeweils als separate Software-Module ausgeführt sind,
b) Mittel (307) zur Speicherung von Parametern (127) zur Auswahl und Anpassung von Einzelfunktionen (123, 124) für eine spezielle Anwendung,
c) Mittel (303, 304) zur Speicherung von Aufruf-Daten für den Aufruf ausgewählter Einzelfunktionen (123, 124), und
d) Mittel (125, 126, 305, 306) zur Zwischenspeicherung von erfaßten Zuständen von Sensoren (11) und von Befehls- oder Zustandsausgaben an Aktoren (12).

2. Busgerät nach Anspruch 1, dadurch gekennzeichnet, daß der E/A-Geräteunabhängige Teil (120) der Busankopplung (100) Systemressourcen (122) aufweist, insbesondere einen Mikroprozessor oder Mikrocomputer (300) mit einer Verarbeitungseinheit (301), einem ROM als Nurlesespeicher (302), einem EEPROM als lösch- und programmierbaren Festspeicher (308) und einem RAM als Schreib/Lesespeicher (309), auf die die ausgewählten Einzelfunktionen (123, 124) und eine Hardware-Anpassung (111) des E/A-Geräte-abhängigen Teils (110) Zugriff haben.

3. Busgerät nach Anspruch 1 oder 2, dadurch gekennzeichnet, daß als Mittel zur Festspeicherung der Einzelfunktionen (123, 124) ROM-Bereiche (302) verwendet sind.

4. Busgerät nach einem der vorstehenden Ansprüche, dadurch gekennzeichnet, daß als Mittel zur Speicherung von Parametern (127) dritte EEPROM-Bereiche (307) verwendet sind.

5. Busgerät nach einem der vorstehenden Ansprüche, dadurch gekennzeichnet, daß als Mittel zur Speicherung von Aufruf-Daten für den Aufruf ausgewählter Sensorfunktionen (123) erste EEPROM-Bereiche (303) und für den Aufruf ausgewählter Aktorfunktionen (124) zweite EEPROM-Bereiche (304) verwendet sind.

6. Busgerät nach einem der vorstehenden Ansprüche, dadurch gekennzeichnet, daß als Mittel zur Zwischenspeicherung von Sensorzuständen (125) und Ausgabebefehlen (126) RAM-Bereiche (305, 306) verwendet sind.

7. Busgerät nach einem der Ansprüche 2 bis 6, dadurch gekennzeichnet, daß Funktionen der Hardware-Anpassung (111) entweder im ROM (302) gespeichert sind oder vom Anwender in das EEPROM (308) geladene Funktionen sind und daß die Hardware-Anpassung (111) Zugriff auf die Systemressourcen (122) hat.

8. Verfahren zur Eingabe von erfaßten Zuständen von Sensoren (11) und zur Ausgabe von Befehlen an Aktoren (12) in einem Bussystem der Gebäudesystemtechnik, wobei Sensoren (11) und/oder Aktoren (12) enthaltende E/A-Geräte (10) mittels eines Busankopplers (100), der einen Mikroprozessor oder Mikrocomputer (300) mit einem ROM (302) enthält, mit anderen Komponenten des Bussystems kommunizieren, dadurch gekennzeichnet, daß
a) jede Geräteeinzelfunktion (123, 124) als separates Software-Modul definiert und im Busankoppler (100) im ROM (302) gespeichert wird,
b) vom Anwender durch Eingabe von Parametern (127) Funktionen (123, 124) ausgewählt und angepaßt werden, und außerdem Systemressourcen (122), wie RAM und Timer den Funktionen zur Speicherung vom Anwender zugeteilt werden,
c) Sensorzustände (125) von einer Hardware-Anpassung (111) fortlaufend erfaßt und in einem Übergabespeicher (305) des Busankopplers (100) zwischengespeichert, vom Mikroprozessor (300) abgerufen und innerhalb des Bussystems weitergeleitet werden, und
d) Ausgaben an Aktoren (12) in einem Ausgabe-Übergabespeicher (306) zwischengespeichert und von dort durch die Hardware-Anpassung (111) abgerufen werden, die eine dem jeweiligen Ausgabebefehl entsprechende Ansteuerung der Aktoren (12) durchführt.

9. Verfahren nach Anspruch 8, dadurch gekennzeichnet, daß die Hardware-Anpassung (111) Systemressourcen (122) nutzt, wobei diese nicht über Parameter zugeteilt werden, sondern für die Hardware-Anpassung jeweils selbsttätig die ersten verfügbaren Systemressourcen (122) verwendet.
